# EUROPÄISCHE PATENTSCHRIFT

(11) **EP 3 748 200 B1**
(45) Veröffentlichungstag und Bekanntmachung des Hinweises auf die Patenterteilung: **11.10.2023**
(21) Anmeldenummer: 20177737.2
(22) Anmeldetag: 02.06.2020
(51) Int. Cl.: F16H 48/24, F16D 11/08, F16H 48/32

(54) **DIFFERENTIALGETRIEBE AUFWEISEND EINE DIFFERENTIALSPERRE**
DIFFERENTIAL INCLUDING A DIFFERENTIAL LOCK
DIFFÉRENTIEL COMPRENNANT VERROUILLAGE DU DIFFÉRENTIEL

(30) Priorität: 07.06.2019 DE 102019208345
(43) Veröffentlichungstag der Anmeldung: 09.12.2020
(73) Patentinhaber: ZF Friedrichshafen AG, 88046 Friedrichshafen (DE)
(72) Erfinder: Pfeffer, Andreas, 94505 Bernried (DE)

(56) Entgegenhaltungen:
- EP-A2- 0 758 590
- CN-A- 109 027 177
- DE-A1- 19 950 171
- DE-A1-102005 037 559
- DE-A1-102017 201 411
- JP-A- S61 220 934

## Beschreibung

Die Erfindung bezieht sich auf ein Differentialgetriebe aufweisend eine Differentialsperre mit einer von einem Aktuator aus einer Entsperrstellung in eine Sperrstellung bewegbar antreibbaren Schaltgabel, mit einer zu einem Differentialgetriebe führenden Abtriebswelle, auf der eine Schaltmuffe drehfest angeordnet ist, die von der Schaltgabel koaxial auf der Abtriebswelle mit einem Muffenprofil aus einer Entkoppelstellung in eine Koppelstellung mit einem Radprofil eines Rades des Differentialgetriebes bewegbar ist.

Bei einer derartigen Differentialsperre ist ein Aktuator mit einem Schaltzylinder bekannt, in dem ein von einem Pneumatikdruck beaufschlagbarer Schaltkolben aus einer Entsperrstellung in eine Sperrstellung bewegbar antreibbar ist. Von dem Schaltkolben wird dabei eine Schaltgabel entgegen der Kraft einer Druckfeder bewegt, die diese Bewegung auf eine Schaltmuffe überträgt. Dadurch wird ein Muffenprofil der Schaltmuffe aus einer Entkoppelstellung in eine in ein Radprofil eines Rades des Differentialgetriebes eingreifende Koppelstellung bewegt.

Dabei ist es für eine kurze Schaltzeit wichtig, dass die Schaltmuffe in der Entkoppelstellung nur gering mit ihrem Muffenprofil außer Eingriff von dem Radprofil ist und in der Koppelstellung weitestgehend in das Radprofil eingreift ohne gegen den Grund des Radprofil zu pressen.

Dies erfordert ein aufwendiges Justieren des Bewegungswegs Schaltkolbens zwischen Entsperrstellung und Sperrstellung. Ein Differentialgetriebe mit Differentialsperre des Stands der Technik ist bekannt aus EP 0 758 590 A2, welche die Merkmale des Oberbegriffs des Anspruchs 1 zeigt. Weitere Differentialgetriebe mit Differentialsperren sind bekannt aus CN 109 027 117 A oder DE 199 50 171 A1.

Aufgabe der Erfindung ist es daher ein Differentialgetriebe aufweisend eine Differentialsperre der eingangs genannten Art zu schaffen, die diese Nachteile vermeidet, wobei bei einfachem Aufbau und ohne Justageerfordernis die Schaltmuffe in der Entkoppelstellung nur gering mit ihrem Muffenprofil außer Eingriff von dem Radprofil ist und in der Koppelstellung weitestgehend in das Radprofil eingreift ohne gegen den Grund des Radprofil zu pressen.

Diese Aufgabe wird erfindungsgemäß dadurch gelöst, dass von der Schaltgabel der Außenring eines mit seinem Innenring fest auf der in ihre Entkoppelstellung federbeaufschlagten Schaltmuffe angeordneten Wälzlagers in Koppelstellungsrichtung bewegbar ist, wobei die Schaltgabel einen von dem Rad des Differentialgetriebes weggerichteten axialen Anschlag aufweist, der in der Entsperrstellung der Schaltgabel an einem feststehenden Gegenanschlag in Anlage ist.

Dabei erfolgt eine Festlegung der Entsperrstellung der Schaltgabel unmittelbar durch den Gegenanschlag, an den der Anschlag der Schaltgabel zur Anlage kommt. Dabei ist gleichzeitig die Schaltmuffe in ihrer Entkoppelstellung mit ihrem Muffenprofil nur gering außer Eingriff von dem Radprofil der Schaltmuffe.

Dadurch wird die Schaltzeit für den Eingriff des Muffenprofils in das Radprofil minimiert.

In der Koppelstellung greift das Muffenprofil weitestgehend in das Radprofil ein ohne gegen den Grund des Radprofil zu pressen. Dadurch erfolgt eine maximale Ausnutzung in der Koppelstellung.

Eine Justage der Differentialsperre ist nicht mehr erforderlich.

Durch das Wälzlager werden Reibungsverluste zwischen der Schaltgabel und der Schaltmuffe weitgehend vermieden.

In einfacher Ausbildung kann der Aktuator ein in einem Schaltzylinder verschiebbar angeordneter und von einem Druckmittel druckbeaufschlagbarer Schaltkolben sein, von dem die Schaltgabel in Sperrstellungsrichtung bewegbar beaufschlagbar ist.

Das Druckmittel ist dabei vorzugsweise Druckluft.

Ist dabei der Schaltkolben ein Ringkolben, der auf einer fest angeordneten Schaltstange axial verschiebbar angeordnet ist, so kann bei geringer Baulänge eine sichere Führung des Ringkolbens erreicht werden.

Da die Schaltgabel erfindungsgemäß zwei ein U-Profil aufweisende Schaltarme aufweist, die den Außenring des Wälzlagers zur Hälfte radial umschließen und die mit ihren freien Enden den Außenring des Wälzlagers axial umgreifen, besteht weitestgehend kein axiales Spiel zwischen der Schaltmuffe und der Schaltgabel.

Dies bedeutet, dass die den Aktuator beaufschlagende Kraft direkt auf das Wälzlager einwirkt und ein optimiertes Eingreifen des Muffenprofils in das Radprofil bewirkt.

Zur gleichmäßigen Abstützung der Schaltgabel ist dabei erfindungsgemäß an jedem freien Endbereich der Schaltarme ein axialer Anschlag der Schaltgabel angeordnet. Ist die Differentialsperre in einem Gehäuse angeordnet, so kann der feststehende Gegenanschlag in einfacher Weise an dem Gehäuse der Differentialsperre angeordnet sein.

Ist die Abtriebswelle mit radialem Abstand von einer vorgespannten Schraubendruckfeder umschlossen, die mit ihrem einen Ende an dem Rad des Getriebes abgestützt ist und mit ihrem anderen Ende die Schaltmuffe kraftbeaufschlagt, so wird bei nicht betätigter Differentialsperre mit nur geringem Bauraumerfordernis eine sichere Positionierung der Schaltmuffe in ihrer Entkoppelstellung erreicht.

Zur leichten Verstellbarkeit der Schaltmuffe zwischen ihrer Entkoppelstellung und Koppelstellung kann im axialen Verstellbereich der Schaltmuffe auf der Abtriebswelle die Abtriebswelle als Zahnwelle ausgebildet sein und die Schaltmuffe an ihrer die Zahnwelle umschließenden Muffenöffnung ein der Zahnwelle entsprechendes Zahnprofil aufweisen.

Muffenmitnahmeprofil und Radmitnahmeprofil sind vorzugsweise Zahnprofile.

Ein Ausführungsbeispiel der Erfindung ist in der Zeichnung dargestellt und wird im Folgenden näher beschrieben. Es zeigen:

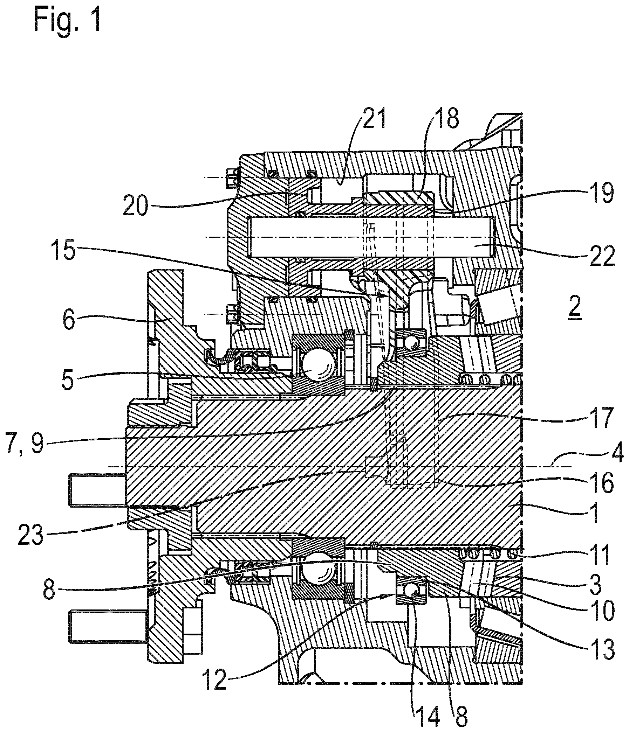

- Figur 1: einen Längsschnitt einer Differentialsperre eines Differentialgetriebes

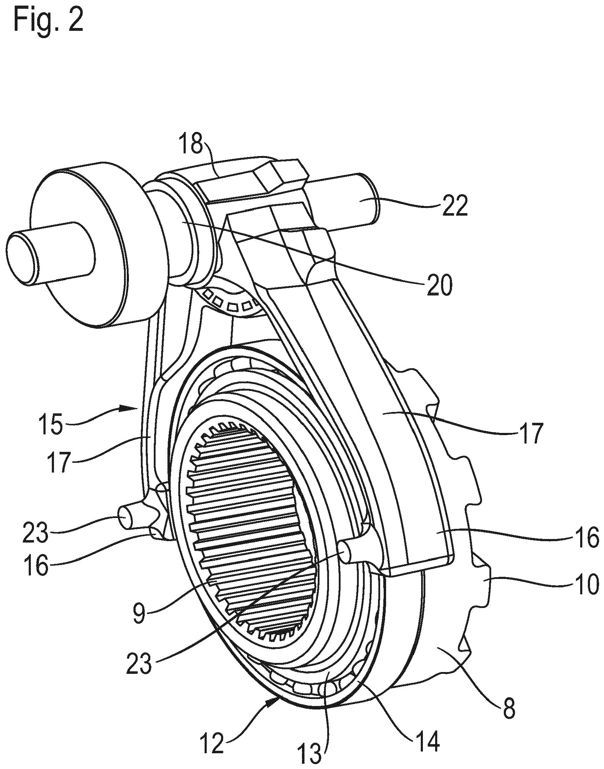

- Figur 2: eine perspektivische Ansicht eines Aktuators der Differentialsperre nach Figur 1.

Die in den Figuren dargestellte Differentialsperre eines Differentialgetriebes eines Kraftfahrzeugs weist eine auf einem Wälzlager 5 um eine Drehachse 4 drehbare gelagerte Abtriebswelle 1 eines als Kegelradgetriebe ausgebildeten Differentialgetriebes 2 auf, auf der ein nicht dargestelltes Achswellenrad fest angeordnet ist.

Ein nicht dargestellter Differentialkorb des Differentialgetriebes 2 ist von einem Motor des Fahrzeugs drehbar antreibbar, wobei diese Drehbewegung über Ausgleichsräder und Achswellenräder des Differentialgetriebes auf die Abtriebswellen 1 übertragen wird.

Mit der Abtriebswelle 1 ist ein zur Drehachse 4 koaxiales, radial umlaufendes Radprofil 3 verbunden, dessen Zahnprofil axial von dem Differentialgetriebe 2 weggerichtet ist.

Das von dem Differentialgetriebe 2 weggerichtete freie Ende der Abtriebswelle 1 ist mit einem Radflansch 6 zur Befestigung eines nicht dargestellten Fahrzeugrades versehen.

In einem axialen Verstellbereich ist die Abtriebswelle 1 als Zahnwelle 7 ausgebildet, auf der eine Schaltmuffe 8 mit ihrer Muffenöffnung 9 entsprechenden Zahnprofils zwischen einer dem Differentialgetriebe 2 entfernteren Entkoppelstellung und einer dem Differentialgetriebe 2 näheren Koppelstellung axial verschiebbar angeordnet ist. Auf ihrer dem Differentialgetriebe zugewandten Stirnseite ist die Schaltmuffe 8 mit einem dem Radprofil 3 entsprechenden Muffenprofil 10 versehen. In der Koppelstellung der Schaltmuffe 8 greift das Muffenprofil 8 voll in das Radprofil 3 ein, so dass über die Schaltmuffe 8 die Differentialsperre eingelegt ist.

In der Entkoppelstellung der Schaltmuffe 8 befindet sich das Muffenprofil 10 gerade so außer Eingriff von dem Radprofil 3, dass die Differentialsperre geöffnet ist.

Damit bei nicht eingelegter Differentialsperre die Schaltmuffe 8 sich sicher außer Eingriff mit ihrem Muffenprofil 10 von dem Radprofil 3 befindet, ist die Schaltmuffe 8 von einer vorgespannten Schraubendruckfeder 11 in ihre Entkoppelstellung beaufschlagt. Die Schraubendruckfeder 11 umschließt mit radialem Abstand die Abtriebswelle 1 und ist mit ihrem einem Ende an dem Achswellenrad des Differentialgetriebes 2 abgestützt. Mit ihrem anderen Ende beaufschlagt sie die Schaltmuffe 8.

Auf der Schaltmuffe 8 ist ein Innenring 13 eines Wälzlagers 12 fest angeordnet, dessen Außenring 14 von den freien Enden 16 der Schaltarme 17 einer Schaltgabel 15 in axialer Richtung umschlossen ist.

Die Schaltarme 17 der Schaltgabel 15 weisen dabei den Außenring 14 des Wälzlagers 12 zur Hälfte umschließend ein U-Profil auf.

Der Bodenbereich 18 des U-Profils weist ein zur Drehachse 4 parallele Führungsbohrung 19 auf, mit der die Schaltgabel 15 auf einem als Ringkolben ausgebildeten Schaltkolben 20 angeordnet ist.

Die Schaltgabel 15 ist mit unterbrochener Linie dargestellt.

Der Schaltkolben 20 ist in einem Schaltzylinder 21 zwischen einer linken Entsperrstellung und einer rechten Sperrstellung axial verschiebbar angeordnet und auf einer den Schaltzylinder 21 koaxial durchragenden Schaltstange 22 verschiebbar geführt.

Der Schaltzylinder 21 ist auf seiner linken Seite von einem Pneumatikdruck derart beaufschlagbar, dass der Schaltkolben 20 aus der Entsperrstellung in seine Sperrstellung und mit ihm über die Schaltgabel 15 und das Wälzlager 12 die Schaltmuffe 8 entgegen der Kraft der Schraubendruckfeder 11 aus ihrer Entkoppelstellung in ihre Koppelstellung bewegt wird.

Entsprechend wird bei Druckentlastung des Schaltzylinders 21 durch die Schraubendruckfeder 11 die Schaltmuffe 8 in ihre Entkoppelstellung und mit der Schaltmuffe 8 über das Wälzlager 12 und die Schaltgabel 14 der Schaltkolben 20 in seine Entsperrstellung bewegt.

An den freien Enden 16 der Schaltarme 17 sind von dem Differentialgetriebe 2 axial weggerichtete Anschläge 23 angeordnet, die in der Entkoppelstellung der Schaltmuffe 8 an nicht dargestellten feststehenden Gegenanschlägen eines Gehäuses der Differentialsperre zur Anlage kommen. Dadurch wird ohne Justiermaßnahmen erreicht, dass in der Entkoppelstellung der Schaltmuffe 8 das Schaltmuffenprofil 10 immer sicher aus dem Radprofil 3 ausgefahren ist, wobei der axiale Abstand zwischen Schaltmuffenprofil 10 und Radprofil 3 minimiert werden kann. Die Anschläge 23 sind, wie die Schaltgabel 15 mit unterbrochener Linie dargestellt.

### Bezugszeichen

- 1: Abtriebswelle
- 2: Differentialgetriebe
- 3: Radprofil
- 4: Drehachse
- 5: Wälzlager
- 6: Radflansch
- 7: Zahnwelle
- 8: Schaltmuffe
- 9: Muffenöffnung
- 10: Muffenprofil
- 11: Schraubendruckfeder
- 12: Wälzlager
- 13: Innenring
- 14: Außenring
- 15: Schaltgabel 16 freie Enden
- 17: Schaltarme
- 18: Bodenbereich
- 19: Führungsbohrung
- 20: Schaltkolben
- 21: Schaltzylinder
- 22: Schaltstange
- 23: Anschläge

## Patentansprüche

1. Differentialgetriebe (2) aufweisend eine Differentialsperre mit einer von einem Aktuator zwischen einer Entsperrstellung und einer Sperrstellung bewegbar antreibbaren Schaltgabel (15), mit einer zu dem Differentialgetriebe (2) führenden Abtriebswelle (1), auf der eine federbelastete Schaltmuffe (8) drehfest angeordnet ist, die von der Schaltgabel (15) koaxial auf der Abtriebswelle (1) mit einem Muffenprofil (10) aus einer Entkoppelstellung, welche zu der Entsperrstellung führt, in eine Koppelstellung, welche zu der Sperrstellung führt, mit einem Radprofil (3) eines Achswellenrads des Differentialgetriebes (2) bewegbar ist, wobei der Außenring (14) eines mit seinem Innenring (13) fest auf der in ihrer Entkoppelstellung federbeaufschlagten Schaltmuffe (8) angeordneten Wälzlagers (12) von der Schaltgabel (15) in Koppelstellungsrichtung bewegbar ist, wobei die Schaltgabel (15) zwei, ein U-Profil aufweisende Schaltarme (17) aufweist, die den Außenring (14) des Wälzlagers (12) zur Hälfte radial umschließen und die mit ihren freien Enden (16) den Außenring (14) des Wälzlagers (12) klauenartig axial umgreifen, **dadurch gekennzeichnet, dass** die Schaltgabel (15) einen von dem Achswellenrad des Differentialgetriebes (2) weggerichteten axialen Anschlag (23) aufweist, der in der Entsperrstellung der Schaltgabel (15) an einem an einem Gehäuse der Differenzialsperre feststehenden Gegenanschlag in Anlage ist und wobei an jedem freien Ende der Schaltarme (17) ein axialer Anschlag (23) der Schaltgabel (15) angeordnet ist.

2. Differentialgetriebe nach Anspruch 1, **dadurch gekennzeichnet, dass** der Aktuator ein in einem Schaltzylinder (21) verschiebbar angeordneter und von einem Druckmittel druckbeaufschlagbarer Schaltkolben (20) ist, von dem die Schaltgabel (15) in Sperrstellungsrichtung bewegbar beaufschlagbar ist.

3. Differentialgetriebe nach Anspruch 2, **dadurch gekennzeichnet, dass** der Schaltkolben (20) ein Ringkolben ist, der auf einer fest angeordneten Schaltstange (22) axial verschiebbar angeordnet ist.

4. Differentialgetriebe nach einem der vorhergehenden Ansprüche, **dadurch gekennzeichnet, dass** die Differentialsperre in einem Gehäuse angeordnet ist.

5. Differentialgetriebe nach Anspruch 4, **dadurch gekennzeichnet, dass** der feststehende Gegenanschlag an dem Gehäuse der Differentialsperre angeordnet ist.

6. Differentialgetriebe nach einem der vorhergehenden Ansprüche, **dadurch gekennzeichnet, dass** die Abtriebswelle (1) mit radialem Abstand von einer vorgespannten Schraubendruckfeder (11) umschlossen ist, die mit ihrem einen Ende an dem Rad des Getriebes abgestützt ist und mit ihrem anderen Ende die Schaltmuffe (8) kraftbeaufschlagt.

7. Differentialgetriebe nach Anspruch 6, **dadurch gekennzeichnet, dass** im axialen Verstellbereich der Schaltmuffe (8) auf der Abtriebswelle (1) die Abtriebswelle (1) als Zahnwelle (7) ausgebildet ist und die Schaltmuffe (8) an ihrer die Zahnwelle (7) umschließenden Muffenöffnung (9) ein der Zahnwelle (7) entsprechendes Zahnprofil aufweist.

8. Differentialgetriebe nach einem der vorhergehenden Ansprüche, **dadurch gekennzeichnet, dass** Muffenprofil (10) und Radprofil (3) Zahnprofile sind.

## Claims

1. Differential transmission (2) having a differential lock with a selector fork (15) which can be driven by an actuator such that it can be moved between an unlocked position and a locked position, with an output shaft (1) which leads to the differential transmission (2) and on which a spring-loaded selector sleeve (8) is arranged fixedly for conjoint rotation, which selector sleeve (8) can be moved by the selector fork (15) axially on the output shaft (1) with a gear profile (3) of an axle shaft gear of the differential mechanism (2) by way of a sleeve profile (10) out of the decoupled position which leads to the unlocked position into a coupled position which leads to the locked position, it being possible for the outer ring (14) of an anti-friction bearing (12) which is arranged with its inner ring (13) fixedly on the selector sleeve (8) which is spring-loaded in its decoupled position to be moved by the selector fork (15) in the direction of the coupled position, the selector fork (15) having two selector arms (17) which have a U-shaped profile, enclose half of the outer ring (14) of the anti-friction bearing (12) radially, and engage axially in a claw-like manner with their free ends (16) around the outer ring (14) of the anti-friction bearing (12), **characterized in that** the selector fork (15) has an axial stop (23) which is directed away from the axle shaft gear of the differential transmission (2) and, in the unlocked position of the selector fork (15) is in contact with a counterstop which is fixed on a housing of the differential lock, and an axial stop (23) of the selector fork (15) being arranged at each free end of the selector arms (17).

2. Differential transmission according to Claim 1, **characterized in that** the actuator is a shift piston (20) which is arranged displaceably in a shift cylinder (21), can be loaded with pressure by a pressure medium, and by which the selector fork (15) can be loaded such that it can be moved in the direction of the locked position.

3. Differential transmission according to Claim 2, **characterized in that** the shift piston (20) is an annular piston which is arranged axially displaceably on a fixedly arranged selector rod (22).

4. Differential transmission according to one of the preceding claims, **characterized in that** the differential lock is arranged in a housing.

5. Differential transmission according to Claim 4, **characterized in that** the fixed counterstop is arranged on the housing of the differential lock.

6. Differential transmission according to one of the preceding claims, **characterized in that** the output shaft (1) is enclosed at a radial spacing by a preloaded compression coil spring (11) which is supported with its one end on the gear of the transmission and loads the selector sleeve (8) with force with its other end.

7. Differential transmission according to Claim 6, **characterized in that** the output shaft (1) is configured as a splined shaft (7) in the axial adjustment region of the selector sleeve (8) on the output shaft (1), and the selector sleeve (8) has a splined profile which corresponds to the splined shaft (7) on its sleeve opening (9) which encloses the splined shaft (7).

8. Differential transmission according to one of the preceding claims, **characterized in that** the sleeve profile (10) and the gear profile (3) are splined profiles.

## Revendications

1. Engrenage différentiel (2) présentant un blocage de différentiel avec une fourche de commutation (15) pouvant être entraînée de manière mobile par un actionneur entre une position de déblocage et une position de blocage, avec un arbre de sortie (1) menant à l'engrenage différentiel (2), sur lequel est agencé de manière solidaire en rotation un manchon de commutation (8) sollicité par ressort, qui peut être déplacé par la fourche de commutation (15) coaxialement sur l'arbre de sortie (1) avec un profil de manchon (10) d'une position de désaccouplement, qui mène à la position de déblocage, dans une position d'accouplement, qui mène à la position de blocage, avec un profil de roue (3) d'une roue d'arbre d'essieu de l'engrenage différentiel (2), la bague extérieure (14) d'un palier à roulement (12) agencé avec sa bague intérieure (13) de manière fixe sur le manchon de commutation (8) sollicité par ressort dans sa position de désaccouplement pouvant être déplacée par la fourche de commutation (15) dans la direction de la position d'accouplement, la fourche de commutation (15) présentant deux bras de commutation (17) présentant un profil en U, qui entourent radialement la moitié de la bague extérieure (14) du palier à roulement (12) et qui, par leurs extrémités libres (16), s'engagent axialement à la manière d'une griffe autour de la bague extérieure (14) du palier à roulement (12), **caractérisé en ce que** la fourche de commutation (15) présente une butée axiale (23) orientée à l'opposé de la roue d'arbre d'essieu de l'engrenage différentiel (2), qui, dans la position de déblocage de la fourche de commutation (15), est en appui sur une contre-butée fixe sur un boîtier du blocage de différentiel et une butée axiale (23) de la fourche de commutation (15) étant agencée à chaque extrémité libre des bras de commutation (17).

2. Engrenage différentiel selon la revendication 1, **caractérisé en ce que** l'actionneur est un piston de commutation (20) agencé de manière coulissante dans un cylindre de commutation (21) et pouvant être sollicité par pression par un moyen de pression, par lequel la fourche de commutation (15) peut être sollicitée de manière mobile dans la direction de la position de blocage.

3. Engrenage différentiel selon la revendication 2, **caractérisé en ce que** le piston de commutation (20) est un piston annulaire qui est agencé de manière coulissante axialement sur une tige de commutation (22) agencée de manière fixe.

4. Engrenage différentiel selon l'une quelconque des revendications précédentes, **caractérisé en ce que** le blocage de différentiel est agencé dans un boîtier.

5. Engrenage différentiel selon la revendication 4, **caractérisé en ce que** la contre-butée fixe est agencée sur le boîtier du blocage de différentiel.

6. Engrenage différentiel selon l'une quelconque des revendications précédentes, **caractérisé en ce que** l'arbre de sortie (1) est entouré à une distance radiale par un ressort de compression hélicoïdal précontraint (11) qui, par une de ses extrémités, s'appuie sur la roue de l'engrenage et, par son autre extrémité, exerce une force sur le manchon de commutation (8).

7. Engrenage différentiel selon la revendication 6, **caractérisé en ce que** dans la zone de réglage axial du manchon de commutation (8) sur l'arbre de sortie (1), l'arbre de sortie (1) est réalisé sous forme d'arbre denté (7) et le manchon de commutation (8) présente sur son ouverture de manchon (9) entourant l'arbre denté (7) un profil de dent correspondant à l'arbre denté (7).

8. Engrenage différentiel selon l'une quelconque des revendications précédentes, **caractérisé en ce que** le profil de manchon (10) et le profil de roue (3) sont des profils dentés.
